# EUROPEAN PATENT SPECIFICATION

(11) **EP 2 660 338 B1**
(45) Date of publication and mention of the grant of the patent: **03.04.2019**
(21) Application number: 11854387.5
(22) Date of filing: 23.12.2011
(51) Int. Cl.: C21B 3/06, C21B 3/08, F27D 15/02

(54) **APPARATUS FOR ASSEMBLING MOLTEN SLAG AND RECOVERING SENSIBLE HEAT**
VORRICHTUNG ZUR SAMMLUNG GESCHMOLZENER SCHLACKE UND ZUR WIEDERHERSTELLUNG DER DAFÜR NÖTIGEN WÄRME
APPAREIL POUR ASSEMBLER DES SCORIES FONDUES ET RÉCUPÉRER DE LA CHALEUR ISSUE DES SCORIES

(30) Priority: 28.12.2010 KR 20100136692
(43) Date of publication of application: 06.11.2013
(73) Proprietor: POSCO, Pohang-si Gyeongsangbuk-do 790-300 (KR); Research Institute Of Industrial Science & Technology, Kyungsangbook-do 790-330 (KR)
(72) Inventor: PARK, Heung Soo, Pohang-si Gyeongsangbuk-do 790-751 (KR); RYU, Sung Uk, Pohang-si Gyeongsangbuk-do 790-826 (KR)
(74) Representative: Zech, Stefan Markus
(86) International application number: PCT/KR2011/010028
(87) International publication number: WO 2012/091365

(56) References cited:
- CN-A- 101 709 338
- JP-A- S5 269 891
- JP-A- S5 417 396
- JP-A- S5 889 938
- JP-A- S52 143 997
- JP-A- 2010 132 956
- KR-A- 20040 056 063
- KR-A- 20100 031 875
- US-A- 4 373 883

## Description

### TECHNICAL FIELD

The present invention relates to an apparatus for assembling molten slag and recovering sensible heat, which converts molten slag into particle type and recovers the internal heat energy of the particle slag. More specifically, the present invention can recover the heat energy of the particle slag more stably.

### BACKGROUND

In general, the temperature of molten slag is about 1400 degrees Celsius. This molten slag has an amount of heat energy. Therefore, in related industries, recovering the heat energy from the molten slag and utilizing the recovered heat energy are recognized as an important problem in the aspect of energy-efficiency improvement. Recovering heat energy in molten slag is achieved by heat exchange with a proper cooling medium after converting the molten slag to particle and increasing its surface area within a diameter of 5mm.

However, the particles of slag are recombined with each other, or grow by adhering to the surface of other apparatus because the semi-molten slag has a very high temperature and a very sticky surface. Consequentially, operations of such apparatus might be limited or the heat transfer rate between the particle slag and cooling fluid could be reduced. The recombined particle slag accelerates its volume and limits its cooling performance. If the volume of the particle slag increases, the slag cannot be used as a high-value resource such as raw material for cement.

In order to reduce the recombination of the slag, there have been many technical attempts to expand the space for scattering the particle slag and to reduce collision between slags. However, this reduces the cooling rate because the cooling medium passes through the expanded space more rapidly. The volume of the cooling apparatus is yet another problem caused by its expanded space.

Therefore, technology is needed to prevent recombination of the particle slags and adhesion to the wall of an apparatus while preventing heat energy loss in a relatively cramped space.

Patent KR20100031875 discloses an apparatus where molten slag is granulated using a rotary cup and drums without water-cooling, and where heat is recovered from granulated slag in a housing below the rotary drums.

### TECHNICAL PROBLEM

The purpose of present invention is to provide an apparatus for assembling molten slag and recovering sensible heat which can prevent the particle slag from recombining and adhering to the walls of other equipment.

Furthermore, the present invention seeks to provide an apparatus for assembling molten slag and recovering sensible heat wherein heat energy can be recovered from the molten slag with high efficiency.

### SOLUTION TO THE PROBLEM

The present invention, an apparatus for assembling molten slag and recovering sensible heat, comprises:
a rotary circular plate which rotates while being cooled by cooling water; and cools the molten slag dropping onto a top surface of the rotary circular plate so as to convert the molten slag into particle slag and scatter the particle slag;
a rotating drum part which rotates while being cooled by cooling water; is spaced apart from a side surface of the rotary circular plate; and collides with the particle slag scattered by the rotary circular plate so as to cool the colliding particle slag, thereby moving the cooled particle slag downward;
an inclined guiding part which is disposed below the rotating drum part with a downward incline; and guides the colliding particle slag to drop downward; and
a sensible-heat recovery casing part which is connected to a lower portion of the inclined guiding part; exchanges heat between a cooling medium and the dropping particle slag; and discharges the heat-exchanged particle slag and cooling medium to an outside of the sensible-heat recovering recovery casing part.

The present invention further comprises: baffles which are disposed to be spaced apart from an inner wall of the sensible-heat recovery casing part along a vertical direction of the inner wall; has a downward incline; and provides a flow path for the heat-exchanged particle slag and cooling medium.

The baffles of the present invention comprise a plurality of slits; and wherein the cooling medium for heat exchange flows through the slits.

The rotary circular plate of the present invention may comprise:
a circular plate onto which the molten slag drops and which rotates so as to scatter the particle slag;
a circular plate joint which is disposed on a bottom surface of the circular plate; provides an axis of the circular plate; and cools the circular plate by making the cooling water pass through the circular plate; and
a circular plate rotating motor which rotates the circular plate by rotating the circular plate joint.

The rotating drum part of the present invention may comprise:
a drum which collides with the particle slag scattered from the rotary circular plate; and rotates to guide the colliding particle slag downward;
a drum joint which is disposed at one end of the drum; provides an rotating axis of the drum; and cools the drum by making the cooling water pass through the drum; and
a drum-rotating motor which rotates the drum by rotating the drum joint.

The inclined guiding part of the present invention has a downward incline between 35° and 45°.

The present invention may further comprise: a slag-discharging part which is disposed below the sensible-heat recovery casing part; and discharges the heat-exchanged particle slag.

### EFFECT OF THE INVENTION

The present invention, apparatus for assembling molten slag and recovering sensible heat, provides various effects as follows.
(1) The present invention can assemble the molten slag and convert it into particle slag, and thereby provide a stable exchange of heat.
(2) The present invention can facilitate the exchange of heat between the cooling medium and the particle slag.

### BRIEF DESCRIPTION OF THE DRAWINGS

Figure 1 is a perspective view illustrating an apparatus for assembling molten slag and recovering sensible heat according to an embodiment of the present invention.
Figure 2 is a plan view illustrating the apparatus for assembling molten slag and recovering sensible heat, as illustrated in Figure 1.
Figure 3 is a perspective view illustrating a baffle of the apparatus for assembling molten slag and recovering sensible heat, as illustrated in Figure 1.

### DETAILED DESCRIPTION

Detailed description of the desirable examples of the present invention is as follows. Describing the present invention, if a relevant well known arts or elements obscure the gist of the present invention, the explanations thereof would be omitted.

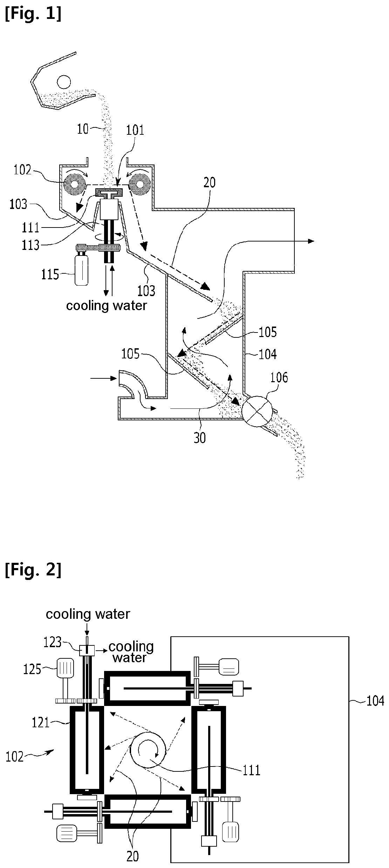

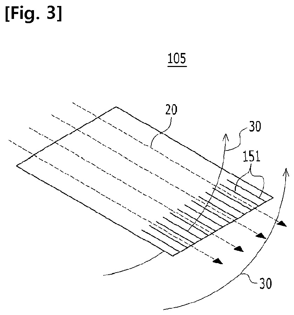

Figure 1 is a perspective view illustrating an apparatus for assembling molten slag and recovering sensible heat according to an embodiment of the present invention. Figure 2 is a plan view illustrating the apparatus for assembling molten slag and recovering sensible heat, as illustrated in Figure 1. Figure 3 is a perspective view illustrating a baffle of the apparatus for assembling molten slag and recovering sensible heat, as illustrated in Figure 1.

As illustrated in Figs. 1-3, the present invention, an apparatus for assembling molten slag and recovering sensible heat, comprises a rotary circular plate 101, a rotating drum part 102, an inclined guiding part 103, a sensible-heat recovery casing part 104 and baffles 105. The present invention converts molten slag 10 into particle slag 20, and recovers the heat energy from the particle slag 20 by using a cooling medium.

The molten slag 10 drops onto the top surface of the rotary circular plate 101. At this time, the cooling water flows in the rotary circular plate 101 and maintains the rotary circular plate 101 in a cool state. The molten slag is more than 1500 °C in temperature. The rotary circular plate 101 does not have mechanical deformation or thermal destruction while contacting the molten slag 10 having high temperature. The molten slag 10 is converted into the particle slag 20 by colliding with the top surface of the rotary circular plate 101 which is consistently cooled by the cooling water. At this time, because of the rapid decrease of the temperature of the surface of the molten slag 10, the surface of the particle slag 20 is solidified to a solid state having poor stickiness. However, the interior of the particle slag 20 which remains a molten state still has heat energy.

The rotary circular plate 101 rotates. For that reason, centrifugal force is applied to the particle slag 20 on the top surface of the rotary circular plate 101, and the particle slag 20 is scattered radially.

The rotary circular plate 101 described above comprises a circular plate 111, a circular plate joint 113 and a circular plate rotating motor 115.

The circular plate 111 contacts the dropped molten slag 10 and scatters the particle slag 20 by rotating.

The circular plate joint 113 is disposed at the bottom surface of the circular plate 111, and provides an axis of the rotating circular plate 111. The circular plate joint 113 cools the circular plate 111 by circulating the cooling water through the circular plate 111.

The circular plate rotating motor 115 rotates the circular plate 111 by rotating the circular plate joint 113.

The rotating drum part 102 is spaced apart from the side surface of the rotary circular plate 101, and collides with the particle slag 20 scattered from the rotary circular plate 101. At this time, cooling water flows in the interior of the rotating drum part 102, so that the rotating drum part 102 remains cool. For that reason, the rotating drum part 102 also cools the particle slag 20. At this time, the particle slag 20 is about 1000 °C in temperature and loses most of its stickiness. The rotating drum part 102 moves the cooled particle slag 20 downward. The particle slag 20 passes through the space between the rotary circular plate 101 and the rotating drum part 102.

The above-stated rotating drum part 102 comprises a drum 121, a drum joint 123 and a drum rotating motor 125.

The drum 121 collides with the particle slag 20 scattered from the rotary circular plate 101, rotates and then guides the particle slag 20 downward.

The drum joint 123 is disposed at one end of the drum 121 and provides an rotating axis to the rotating drum 121. The drum joint 123 makes cooling water pass through the drum 121 and cools the drum 121.

The drum rotating motor 125 rotates the drum 121 by rotating the drum joint 123.

The inclined guiding part 103 is disposed below the rotating drum part 102 and has a downward incline toward the center. The particle slag 20 collides with the rotating drum 120 and is guided to drop downward.

It is desirable that the inclined guiding part 103 has a downward incline between 35° and 45°. If the angle of the inclined guiding part 103 is smaller than 35°, the particle slag 20 will stagnate. On the other hand, if the angle of the inclined guiding part 103 is larger than 45°, the particle slag 20 is guided limitedly to the inclined guiding part 103. The particle slag 20 does not recombine and does not stick to the inclined guiding part 103 because the particle slag 20 has lost its sticky properties. For that reason, the particle slag 20 is stably guided downward without stagnation.

The sensible-heat recovery casing part 104 is connected to the lower portion of the inclined guiding part 103. The particle slag 20 is guided to the top part of the sensible-heat recovery casing part 104. The cooling medium 30 is guided to the bottom part of the sensible-heat recovery casing part 104 and goes toward the inclined guiding part 103. At this time, the exchange of heat between cooling medium 30 flowing upward and the particle slag 20 dropped downward is prompted by the sensible-heat recovery casing part 104. After that, the cooling medium 30 is discharged through the top part of the sensible-heat recovery casing part 104 after recovering heat energy from the particle slag 20. On the other hand, the particle slag 20 is discharged through the bottom part of the sensible-heat recovery casing part 104 after being cooled by the cooling medium 30.

The baffles 105 are disposed at the inner wall of the sensible-heat recovery casing part 104, are spaced apart from each other along the vertical direction of the sensible-heat recovery casing part 104, and have a downward incline. The particle slag 20 is guided downward through the space between the baffles 105 and the sensible-heat recovery casing part 104. The cooling medium 30 is guided to the top part.
In comparison with the case in which the baffles 105 are not installed, a relatively small quantity of the cooling medium 30 is guided to the sensible-heat recovery casing part 104, and the fluidized bed is formed. Because of the small quantity of the cooling medium 30, the cooling medium 30 recovering the heat energy from the particle slag 20 has a relatively high temperature. Because of the fluidized bed, the particle slag 20 and the cooling medium 30 have more uniform fluidized distribution.

The baffles 105 also comprise a plurality of slits. The cooling medium 30 executing the exchange of heat flows through the slits. For that reason, the particle slag 20 flowing along the baffles 105 have an area of contact with the cooling medium 30 passing through the slits 151. Therefore, the exchange of heat between the particle slag 20 and the cooling medium 30 can be improved. The number of the baffles 105 can be modified according to the amount of the heat energy recovered from the particle slag 20 by the cooling medium 30.

The apparatus for assembling molten slag and recovering sensible heat according to the present invention further comprises a slag-discharging part 106. The slag-discharging part 106 discharges the particle slag 20 having undergone heat exchange in the sensible-heat recovery casing part 104. The particle slag 20 discharged by the slag-discharging part 106 could have various uses according to its needs.

## Claims

1. An apparatus for assembling molten slag and recovering sensible heat, the apparatus comprising:
a rotary circular plate (101) which rotates while being cooled by cooling water; and cools the molten slag dropping onto a top surface of the rotary circular plate (101) so as to convert the molten slag into particle slag and scatter the particle slag;
a rotating drum part (102) which rotates while being cooled by cooling water;
is spaced apart from a side surface of the rotary circular plate; and
collides with the particle slag scattered by the rotary circular plate so as to cool the colliding particle slag, thereby moving the cooled particle slag downward;
an inclined guiding part (103) which is disposed below the rotating drum part (102) with a downward incline; and
guides the colliding particle slag to drop downward;
a sensible-heat recovery casing part (104) which is connected to a lower portion of the inclined guiding part (103);
exchanges heat between a cooling medium and the dropping particle slag; and
discharges the heat-exchanged particle slag and cooling medium to an outside of the sensible-heat recovering recovery casing part (104) and baffles (105) which are disposed to be spaced apart from an inner wall of the sensible-heat recovery casing part (104) in a vertical direction of the inner wall;
have a downward incline; and
provides a flow path for the heat-exchanged particle slag and cooling medium,
the baffles (105) comprising a plurality of slits; and
the cooling medium for heat exchange flowing through the plurality of slits.

2. The apparatus according to Claim 1, wherein the rotary circular plate (101) comprises:
a circular plate (111) onto which the molten slag drops and which rotates so as to scatter the particle slag;
a circular plate joint (113) which is disposed on a bottom surface of the circular plate (111);
provides an axis of the circular plate; and
cools the circular plate by making the cooling water pass through the circular plate; and
a circular plate rotating motor (115) which rotates the circular plate (111) by rotating the circular plate joint (113).

3. The apparatus according to Claim 1, wherein the rotating drum part (102) comprises:
a drum (121) which collides with the particle slag scattered from the rotary circular plate (101); and
rotates to guide the colliding particle slag downward;
a drum joint (123) which is disposed at one end of the drum (121);
provides an rotating axis of the drum; and
cools the drum by making the cooling water pass through the drum; and
a drum-rotating motor (125) which rotates the drum (121) by rotating the drum joint (123).

4. The apparatus according to Claim 1, wherein the inclined guiding part (103) has a downward incline between 35° and 45°.

5. The apparatus according to Claim 1, further comprising:
a slag-discharging part (106) which is disposed below the sensible-heat recovery casing part (104); and
discharges the heat-exchanged particle slag.

## Patentansprüche

1. Vorrichtung zur Sammlung geschmolzener Schlacke und zur Rückgewinnung der fühlbaren Wärme, wobei die Vorrichtung aufweist:
eine drehende kreisförmige Platte (101), die sich dreht und dabei durch Kühlwasser gekühlt wird; und die auf eine Oberfläche der drehenden kreisförmigen Platte (101) tropfende geschmolzene Schlacke kühlt, um die geschmolzene Schlacke in Partikelschlacke zu verwandeln und die Partikelschlacke zu verteilen;
ein Drehtrommelteil (102), das sich dreht und dabei durch Kühlwasser gekühlt wird;
von einer Seitenfläche der drehenden kreisförmigen Platte beabstandet ist; und
mit der durch die drehende kreisförmige Platte verteilten Partikelschlacke kollidiert, um die kollidierende Partikelschlacke zu kühlen und dabei die gekühlte Partikelschlacke nach unten bewegt;
ein geneigtes Führungsteil (103), das unter dem Drehtrommelteil (102) mit einer Abwärtsneigung angeordnet ist; und
die kollidierende Partikelschlacke so führt, dass sie nach unten tropft;
ein Rückgewinnungsgehäuseteil (104) für fühlbare Wärme, das an einem unteren Abschnitt des geneigten Führungsteils (103) angeschlossen ist;
Wärme zwischen einem Kühlmittel und der herabtropfenden Partikelschlacke austauscht; und
die wärmeausgetauschte Partikelschlacke und das Kühlmittel zu einer Außenseite des Rückgewinnungsgehäuseteils (104) für fühlbare Wärme und Leitblechen (105) ausleitet, die von einer Innenwand des Rückgewinnungsgehäuseteils (104) für fühlbare Wärme in einer vertikalen Richtung der Innenwand beabstandet ist;
eine Abwärtsneigung haben; und
einen Strömungsweg für die wärmeausgetauschte Partikelschlacke und das Kühlmittel bereitstellt,
wobei die Leitbleche (105) mehrere Schlitze aufweisen; und
das Kühlmittel zum Wärmeaustausch durch die mehreren Schlitze fließt.

2. Vorrichtung nach Anspruch 1, wobei die drehende kreisförmige Platte (101) aufweist:
eine kreisförmige Platte (111), auf welche die geschmolzene Schlacke tropft, und die sich dreht, um die Partikelschlacke zu verteilen;
ein Gelenk (113) für die kreisförmige Platte, das auf einer Unterseite der kreisförmigen Platte (111) angeordnet ist;
eine Achse der kreisförmigen Platte bereitstellt; und
die kreisförmige Platte kühlt, indem bewirkt wird, dass Kühlwasser durch die kreisförmige Platte hindurch läuft; und
einen Motor (115) für die kreisförmige Platte, der die kreisförmige Patte (111) durch Drehen des Gelenks (113) für die kreisförmige Platte dreht.

3. Vorrichtung nach Anspruch 1, wobei das Drehtrommelteil (102) aufweist:
eine Trommel (121) die mit der von der drehenden kreisförmigen Platte (101) verteilten Partikelschlacke kollidiert; und
sich dreht, um die kollidierende Partikelschlacke nach unten zu leiten;
ein Trommelgelenk (123), das an einem Ende der Trommel (121) angeordnet ist;
eine Drehachse der Trommel bereitstellt; und
die Trommel kühlt, indem bewirkt wird, dass Kühlwasser durch die Trommel hindurch läuft; und
einen Trommeldrehmotor (125), der die Trommel (1212) durch Drehen des Trommelgelenks (123) dreht.

4. Vorrichtung nach Anspruch 1, wobei das geneigte Führungsteil (103) eine Abwärtsneigung von zwischen 35° und 45° hat.

5. Vorrichtung nach Anspruch 1, darüber hinaus aufweisend:
ein Schlackenausleitteil (106), das unter dem Rückgewinnungsgehäuseteil (104) für fühlbare Wärme angeordnet ist; und
die wärmeausgetauschte Partikelschlacke ausleitet.

## Revendications

1. Appareil pour assembler des scories fondues et récupérer de la chaleur sensible, l'appareil comprenant :
un plateau circulaire (101) rotatif qui tourne tout en étant refroidi par de l'eau de refroidissement ; et refroidit les scories fondues tombant sur une surface supérieure du plateau circulaire (101) rotatif de manière à convertir les scories fondues en scories particulaires et disperser les scories particulaires ;
une partie tambour rotatif (102) qui tourne tout en étant refroidi par de l'eau de refroidissement ;
est distante d'une surface latérale du plateau circulaire rotatif ; et
entre en collision avec les scories particulaires dispersées par le plateau circulaire rotatif de manière à refroidir les scories particulaires en collision, déplaçant ainsi les scories particulaires refroidies vers le bas ;
une partie de guidage inclinée (103) qui est disposée sous la partie tambour rotatif (102) avec une inclinaison vers le bas ; et
guide les scories particulaires en collision pour qu'elles tombent vers le bas ;
un partie carter de récupération de chaleur sensible (104) qui est connectée à une partie inférieure de la partie de guidage inclinée (103) ;
échange de la chaleur entre un fluide de refroidissement et les scories particulaires qui tombent ; et
évacue les scories particulaires à chaleur échangée et le fluide de refroidissement vers un extérieur de la partie carter de récupération de chaleur sensible (104) et des déflecteurs (105) qui sont disposés pour être distants d'une paroi intérieure de la partie carter de récupération de chaleur sensible (104) dans une direction verticale de la paroi intérieure ;
présente une inclinaison vers le bas ; et
fournit un chemin d'écoulement pour les scories particulaires à chaleur échangée et le fluide de refroidissement,
les déflecteurs (105) comprenant une pluralité de fentes ; et
le fluide de refroidissement pour échange de chaleur circulant à travers la pluralité de fentes.

2. L'appareil selon la revendication 1, sachant que le plateau circulaire (101) rotatif comprend :
un plateau circulaire (111) sur lequel les scories fondues tombent et qui tourne de manière à disperser les scories particulaires ;
une articulation de plateau circulaire (113) qui est disposée sur une surface inférieure du plateau circulaire (111) ;
fournit un axe du plateau circulaire ; et
refroidit le plateau circulaire en faisant passer l'eau de refroidissement par le plateau circulaire ; et
un moteur de rotation de plateau circulaire (115) qui fait tourner le plateau circulaire (111) en faisant tourner l'articulation de plateau circulaire (113).

3. L'appareil selon la revendication 1, sachant que la partie tambour rotatif (102) comprend :
un tambour (121) qui entre en collision avec les scories particulaires dispersées depuis le plateau circulaire (101) rotatif ; et
tourne pour guider les scories particulaires en collision vers le bas ;
une articulation de tambour (123) qui est disposée à une extrémité du tambour (121) ;
fournit un axe de rotation du tambour ; et
refroidit le tambour en faisant passer l'eau de refroidissement par le tambour ; et
un moteur de rotation de tambour (125) qui fait tourner le tambour (121) en faisant tourner l'articulation de tambour (125).

4. L'appareil selon la revendication 1, sachant que la partie de guidage inclinée (103) présente une inclinaison vers le bas comprise entre 35° et 45°.

5. L'appareil selon la revendication 1, comprenant en outre :
une partie évacuation de scories (106) qui est disposée sous la partie carter de récupération de chaleur sensible (104) ; et
évacue les scories particulaires à chaleur échangée.
